# EUROPEAN PATENT APPLICATION

(11) **EP 4 794 285 A1**
(43) Date of publication of application: **19.08.2026**
(21) Application number: 24887732.6
(22) Date of filing: 18.10.2024
(51) Int. Cl.: H04L 41/0803

(54) **COMMUNICATION METHOD AND APPARATUS**

(30) Priority: 06.11.2023 CN 202311472361
(71) Applicant: HUAWEI TECHNOLOGIES CO., LTD., Shenzhen, Guangdong 518129 (CN)
(72) Inventor: MO, Liguang, Shenzhen, Guangdong 518129 (CN); LUO, Tailong, Shenzhen, Guangdong 518129 (CN); ZHANG, Zhang, Shenzhen, Guangdong 518129 (CN)
(74) Representative: Pfenning, Meinig & Partner mbB
(86) International application number: PCT/CN2024/125935
(87) International publication number: WO 2025/098119

(57) **Abstract**

A communication method and apparatus are disclosed. The method includes: A first network device determines a shared signal processing resource of a third network device; receives first configuration information, where the first configuration information includes first indication information and first request information, the first indication information indicates the third network device to forward the first request information, and the first request information is used to request a first configuration operation on the third network device; and sends second indication information, where the second indication information indicates to perform the first configuration operation. The method may be used to flexibly implement related configurations of the third network device in real time, thereby improving operation and maintenance efficiency of a communication system.

## Description

### CROSS-REFERENCE TO RELATED APPLICATIONS

This application claims priority to Chinese Patent Application No. 202311472361.1, filed with the China National Intellectual Property Administration on November 6, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

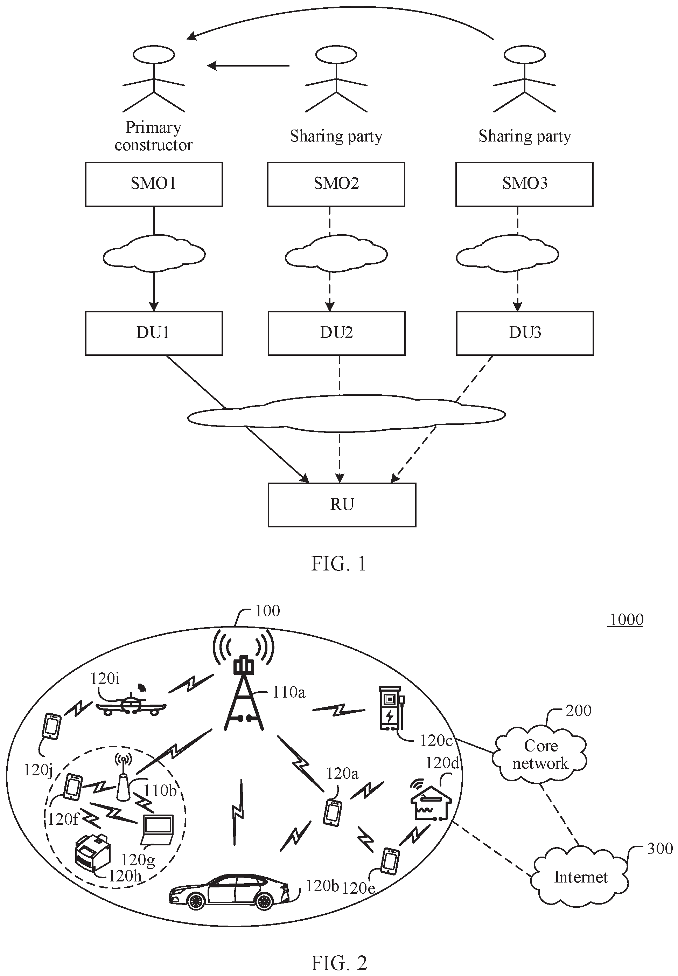

Currently, a networking architecture supported by a communication system, as shown in FIG. 1, includes a distributed unit (Distributed Unit, DU) and a radio unit (Radio Unit, RU). Related resources on the RU may be allocated to a plurality of operators for use. In other words, the plurality of operators share the RU. The plurality of operators are classified into an operator of a primary constructor and an operator of a sharing party based on roles. The operators perform network communication with respective DUs (for example, represented as a DU1, a DU2, and a DU3) through network management systems (Service Management and Orchestration, SMO) (for example, represented as SMO1, SMO2, and SMO3). Each DU is connected to a same shared RU to establish control-plane, user-plane, and management-plane communication channels.

When the DU of the sharing party needs to perform some operation and maintenance operations on the RU, such as resetting the RU, adjusting resource allocation of the RU, upgrading software of the RU, and adjusting a tilt angle of an antenna in the RU, these operation and maintenance operations may affect services of all operators. Usually, after offline negotiation between operation and maintenance personnel of the sharing party negotiate and operation and maintenance personnel of the primary constructor, the operation and maintenance personnel of the primary constructor perform the operations on behalf of the sharing party. For example, an operation and maintenance command is sent to the RU through a network management device and the DU of the primary constructor. In FIG. 1, a solid arrow represents an operation and maintenance communication manner, and a dashed arrow represents a service-based communication manner.

Such an operation and maintenance manner heavily depends on operation and maintenance personnel from a plurality of parties, resulting in low flexibility and poor real-time performance of implementing operation and maintenance, thereby severely affecting overall operation and maintenance efficiency of the communication system.

### SUMMARY

Embodiments of this application provide a communication method and apparatus, to improve operation and maintenance efficiency of a communication system in a shared RU networking architecture.

According to a first aspect, an embodiment of this application provides a communication method. The method may be performed by a first network device or a module (or a chip) used in the first network device. Based on role division, the first network device (for example, a distributed unit) and a third network device (for example, a radio frequency unit) may belong to a same manager (or a management party). The method may include: determining a signal processing resource, where the signal processing resource is a shared signal processing resource of the third network device; receiving first configuration information, where the first configuration information includes first indication information and first request information, the first indication information indicates the third network device to forward the first request information, and the first request information is used to request a first configuration operation on the third network device; and sending second indication information, where the second indication information indicates to perform the first configuration operation.

According to the foregoing solution, different distributed units may share a signal processing resource of a same radio frequency unit, and the radio frequency unit may provide a logical communication channel for different distributed units, so that the different distributed units may implement communication through the radio frequency unit to facilitate dynamic negotiation. In this way, operation and maintenance management, resource allocation, or the like is flexibly performed on the radio frequency unit based on running conditions of the different distributed units, to reduce dependence on operation and maintenance personnel, thereby improving operation and maintenance efficiency of a communication system.

In a possible implementation, the first configuration operation includes a resource allocation request operation on the signal processing resource of the third network device, and the second indication information indicates a resource allocation result of the signal processing resource of the third network device.

According to the foregoing solution, the radio frequency unit may provide the logical communication channel for the different distributed units, so that the different distributed units may implement dynamic negotiation and adjustment of resource allocation through the radio frequency unit, to improve real-time performance of adjusting allocation of a related resource of the shared radio frequency unit.

In a possible implementation, the first configuration operation includes an operation and maintenance operation, the second indication information indicates to perform the operation and maintenance operation, and the operation and maintenance operation includes at least one of the following: resetting the third network device, upgrading software of the third network device, or adjusting a component associated with the third network device.

According to the foregoing solution, the radio frequency unit may provide the logical communication channel for the different distributed units, so that the different distributed units may implement dynamic negotiation of an operation and maintenance operation on the shared radio frequency unit through the radio frequency unit, to perform the corresponding operation and maintenance operation on the shared radio frequency unit in time, thereby improving overall operation and maintenance efficiency.

In a possible implementation, the signal processing resource includes at least one of the following: a spectrum resource, a power resource, or an azimuth or a tilt angle of an antenna associated with the third network device. This is merely an example instead of any limitation herein. In a specific implementation, the signal processing resource provided by the third network device may further include another type of resource. Details are not described herein.

In a possible implementation, the method may further include: receiving third indication information, where the third indication information indicates identification information of a plurality of network devices connected to the third network device, the plurality of network devices include the first network device and a second network device, and the signal processing resource is shared by the first network device and the second network device.

According to the foregoing solution, the third network device may externally disclose the identification information of the plurality of network devices that share the resource of the third network device, and the first network device may determine, based on the received third indication information, devices sharing a related resource of the third network device.

In a possible implementation, the method may further include: receiving first information from a first network management device, where the first network management device is configured to manage the first network device and the third network device, and the first information includes operation permissions of different network devices for the third network device; and storing the first information.

According to the foregoing solution, the first network device may preset, under management and configuration of the first network management device, the operation permission of the different network devices for the third network device, so that different configuration operations that may be performed by the different network devices on the third network device may be subsequently determined based on information about the preset operation permissions, to ensure secure and reliable running of the third network device.

In a possible implementation, the method may further include: authenticating the first configuration operation based on the first information.

According to the foregoing solution, the first network device may determine, based on the preset first information, whether the first configuration operation is a configuration operation that is allowed to be performed. If the authentication succeeds, the first network device may allow the first configuration operation; or if the authentication fails, the first network device may not allow the first configuration operation, thereby ensuring secure and reliable running of the third network device.

In a possible implementation, the method may further include: receiving second information from the first network management device, where the second information includes use permissions and quotas of different network devices for the signal processing resource of the third network device; and storing the second information.

According to the foregoing solution, the first network device may preset, under management and configuration of the first network management device, the use permissions and the quotas of the different network devices for the signal processing resource of the third network device, so that ranges, quotas, and the like of signal processing resources that may be shared by the different network devices may be subsequently determined based on information such as the preset use permissions and quotas, to adaptively adjust resource allocation and ensure a service implementation of the different network devices as much as possible.

In a possible implementation, when the first configuration operation includes the resource allocation request operation on the signal processing resource of the third network device, the method may further include: generating the second indication information based on the second information.

According to the foregoing solution, the first network device may adaptively adjust, based on the preset use permissions and quotas of the different network devices for the signal processing resource of the third networking device, allocation of the signal processing resource of the third network device, to fully use the signal processing resource of the third network device, and ensure a service implementation of the different network devices.

In a possible implementation, the method may further include: sending third information, where the third information includes identification information of the first network device.

According to the foregoing solution, the first network device may send the identification information of the first network device to the third network device, to perform identity registration with the third network device, thereby causing the third network device to learn that the first network device participates in shared use of the signal processing resource of the third network device.

In a possible implementation, the third network device may be the radio frequency unit RU, and the first network device and the second network device are distributed units DUs. In this way, in the communication system in networking of the shared RU, each distributed unit may implement, by implementing the foregoing method, resource allocation for the shared RU and flexible and timely device operation and maintenance, thereby improving operation and maintenance efficiency of the entire system.

According to a second aspect, an embodiment of this application provides a communication method. The method may be performed by a third network device or a module (or a chip) used in the third network device. The third network device may be, for example, a radio frequency unit. The method may include: determining a signal processing resource, where the signal processing resource is a shared signal processing resource of the third network device; receiving first configuration information, where the first configuration information includes first indication information and first request information, the first indication information indicates the third network device to forward the first request information, and the first request information is used to request a first configuration operation on the third network device; sending the first configuration information; and receiving second indication information, where the second indication information indicates to perform the first configuration operation.

According to the foregoing solution, the radio frequency unit may forward information between the first network device and a second network device, so that the first network device may perform dynamic negotiation with the second network device, to implement operation and maintenance management, resource allocation, or the like flexibly and in a timely manner on the third network device, so as to reduce dependence on operation and maintenance personnel, thereby improving operation and maintenance efficiency of the communication system.

In a possible implementation, the first configuration operation includes a resource allocation request operation on the signal processing resource of the third network device, and the second indication information indicates a resource allocation result of the signal processing resource of the third network device.

In a possible implementation, the first configuration operation includes an operation and maintenance operation, the second indication information indicates to perform the operation and maintenance operation, and the operation and maintenance operation includes at least one of the following: resetting the third network device, upgrading software of the third network device, or adjusting a component associated with the third network device.

In a possible implementation, the signal processing resource includes at least one of the following: a spectrum resource, a power resource, or an azimuth or a tilt angle of an antenna associated with the third network device.

In a possible implementation, the method may further include: receiving third information, where the third information includes identification information of the first network device; receiving fourth information, where the fourth information includes identification information of the second network device; and the determining the signal processing resource includes: determining the signal processing resource based on the third information and the fourth information.

In a possible implementation, the method may further include: sending third indication information, where the third indication information indicates identification information of a plurality of network devices connected to the third network device, the plurality of network devices include the first network device and the second network device, and the signal processing resource is shared by the first network device and the second network device.

In a possible implementation, the method further includes: sending fourth indication information, where the fourth indication information includes a result of performing the first configuration operation.

In a possible implementation, the third network device is a radio frequency unit RU, and the first network device and the second network device are distributed units DUs.

According to a third aspect, an embodiment of this application provides a communication method. The method may be performed by a second network device or a module (or a chip) used in the second network device. The second network device may be, for example, a distributed unit. The method may include: determining a signal processing resource, where the signal processing resource is a shared signal processing resource of a third network device; sending first configuration information, where the first configuration information includes first indication information and first request information, the first indication information indicates the third network device to forward the first request information, and the first request information is used to request a first configuration operation on the third network device; and receiving fourth indication information, where the fourth indication information includes a result of performing the first configuration operation.

According to the foregoing solution, the second network device may serve as a sharing party to share the resource of the third network device with a first network device, and the second network device may send related configuration information to the third network device and the first network device based on a running condition of the second network device, to perform dynamic negotiation with the first network device through the third network device, to flexibly implement operation and maintenance management, resource allocation, or the like on the third network device, so as to reduce dependence on operation and maintenance personnel, thereby improving operation and maintenance efficiency of the communication system.

In a possible implementation, the first configuration operation includes a resource allocation request operation on the signal processing resource of the third network device.

In a possible implementation, the first configuration operation includes an operation and maintenance operation, and the operation and maintenance operation includes at least one of the following: resetting the third network device, upgrading software of the third network device, or adjusting a component associated with the third network device.

In a possible implementation, the signal processing resource includes at least one of the following: a spectrum resource, a power resource, or an azimuth or a tilt angle of an antenna associated with the third network device.

In a possible implementation, the method further includes: sending fourth information, where the fourth information includes identification information of the second network device.

In a possible implementation, the method further includes: receiving third indication information, where the third indication information indicates identification information of a plurality of network devices connected to the third network device, the plurality of network devices include the first network device and the second network device, and the signal processing resource is shared by the first network device and the second network device.

In a possible implementation, the third network device is a radio frequency unit RU, and the first network device and the second network device are distributed units DUs.

According to a fourth aspect, an embodiment of this application provides a communication apparatus. The communication apparatus may be a distributed unit or a module (such as a chip) used in the distributed unit. The apparatus has a function of implementing any one of the implementations of the first aspect or the third aspect. The function may be implemented by hardware, or may be implemented by hardware executing corresponding software. The hardware or the software includes one or more modules corresponding to the function.

According to a fifth aspect, an embodiment of this application provides a communication apparatus. The communication apparatus may be a radio frequency unit or a module (for example, a chip) used in the radio frequency unit. The apparatus has a function of implementing any one of the implementations of the second aspect. The function may be implemented by hardware, or may be implemented by hardware executing corresponding software. The hardware or the software includes one or more modules corresponding to the function.

According to a sixth aspect, an embodiment of this application provides a communication apparatus, including at least one processor. The at least one processor may be coupled to the processor, and is configured to invoke a computer program or instructions in a memory to perform any one of the implementations of the first aspect to the third aspect.

According to a seventh aspect, an embodiment of this application provides a communication apparatus, including a processor and a memory. The memory is configured to store computer instructions, and when the apparatus is run, the processor executes the computer instructions stored in the memory, to cause the apparatus to perform any one of the implementations of the first aspect to the third aspect.

According to an eighth aspect, an embodiment of this application provides a communication apparatus, including a unit or a means (means) for performing steps of any one of the implementations of the first aspect to the third aspect.

According to a ninth aspect, an embodiment of this application provides a communication apparatus, including a processor and an interface circuit. The processor is configured to communicate with another apparatus through the interface circuit, and perform any one of the implementations of the first aspect to the third aspect. One or more processors are included.

According to a tenth aspect, an embodiment of this application further provides a chip system, including at least one processor. The at least one processor is configured to invoke one or more computer programs or instructions in a memory, to implement any one of the implementations of the first aspect to the third aspect.

According to an eleventh aspect, an embodiment of this application provides a communication system, including one or more of the following: a network device configured to implement the method in any one of the first aspect and the possible implementations, a network device configured to implement the method in any one of the second aspect and the possible implementations, or a network device configured to implement the method in any one of the third aspect and the possible implementations.

According to a twelfth aspect, an embodiment of this application provides a computer-readable storage medium. The computer-readable storage medium stores computer-executable instructions, and the computer-executable instructions, when invoked by an electronic apparatus, cause the electronic apparatus to perform the method in any one of the first aspect and the possible implementations, or perform the method in any one of the second aspect and the possible implementations, or perform the method in any one of the third aspect and the possible implementations.

According to a thirteenth aspect, an embodiment of this application provides a computer program product, including computer-executable instructions. The computer-executable instructions, when run on a computer, cause the computer to perform the method in any one of the first aspect and the possible implementations, or perform the method in any one of the second aspect and the possible implementations, or perform the method in any one of the third aspect and the possible implementations.

Based on the implementations provided in the foregoing aspects, embodiments of this application may be further combined to provide more implementations.

### BRIEF DESCRIPTION OF DRAWINGS

FIG. 1 is a diagram of a networking manner and an operation and maintenance manner of a communication system;
FIG. 2 is a diagram of a communication system to which an embodiment of this application is applicable;
FIG. 3 is a diagram of a radio access network RAN;
FIG. 4 is a diagram of functional modules of an access network device;
FIG. 5 is a diagram of a networking manner of a communication system according to an embodiment of this application;
FIG. 6 is a schematic flowchart of a communication method according to an embodiment of this application;
FIG. 7 is a diagram of a request packet according to an embodiment of this application;
FIG. 8 is a schematic flowchart of a communication method performed by a first network device according to an embodiment of this application;
FIG. 9 is a schematic flowchart of a communication method performed by a second network device according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

To make objectives, technical solutions, and advantages of embodiments of this application clearer, embodiments of this application are further described in detail below with reference to the accompanying drawings.

At least one (item) in embodiments of this application indicates one (item) or more (items). "A plurality of (items)" means two (items) or more (items). The term "and/or" means an association relationship for describing associated objects and represents that three relationships may exist. For example, A and/or B may represent the following three cases: only A exists, both A and B exist, and only B exists. A character "/" generally indicates an "or" relationship between associated objects. In addition, it should be understood that although terms such as first and second may be used in embodiments of this application to describe objects, these objects should not be limited to these terms. These terms are merely used to distinguish between the objects.

Terms "include", "have", and any variant thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, words such as "in an example" or "for example" is used to represent giving an example, an illustration, or a description. Any method or design solution described as "in an example" or "for example" in embodiments of this application should not be explained as being preferable or having more advantages than another method or design solution. Exactly, use of the words such as "in an example" or "for example" is intended to present a related concept in a specific manner.

Technologies provided in embodiments of this application may be applied to various communication systems. FIG. 2 is a diagram of a possible and non-limiting communication system. As shown in FIG. 2, the communication system 1000 includes a radio access network (radio access network, RAN) 100 and a core network (core network, CN) 200. The RAN 100 includes at least one RAN node (for example, 110a and 110b in FIG. 2, which are collectively referred to as 110) and at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the Third Generation Partnership Project (3rd Generation Partnership Project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), or a cloud radio access network (cloud radio access network, CRAN). The RAN 100 may alternatively be a communication system that integrates the foregoing two or more systems.

The RAN node 110 sometimes may also be referred to as an access network device, a RAN entity, an access node, or the like, and forms a part of the communication system, to help the terminal implement radio access. A plurality of RAN nodes 110 in the communication system 1000 may be a same type of nodes, or may be different types of nodes. In some scenarios, roles of the RAN node 110 and the terminal 120 are relative. For example, the network element 120i in FIG. 2 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 2 may be understood as communication apparatuses having a base station function, and the network elements 120a to 120j may be understood as communication apparatuses having a terminal function.

The terminal and the RAN node are described in detail below.

### (1) Terminal:

The terminal may also be referred to as a terminal device, a user equipment (user equipment, UE), a mobile station, a mobile terminal, or the like. The terminal may be a user-side entity configured to receive or transmit a signal. The terminal may communicate with one or more core networks through a RAN. The terminal includes a handheld device having a wireless connection function, another processing device connected to a wireless modem, an on-board device, or the like. A communication device may be a portable, pocket-sized, handheld, computer built-in, or on-board mobile apparatus. The terminal may be widely applied to various scenarios, for example, cellular communication, device-to-device (device-to-device, D2D) communication, vehicle to everything (vehicle to everything, V2X) communication, point-to-point P2P communication, machine-to-machine M2M communication, machine-type communication (machine-type communication, MTC), an internet of things (internet of things, IoT), virtual reality (virtual reality, VR), augmented reality (augmented reality, AR), industrial control, self-driving, telemedicine, a smart grid, smart furniture, a smart office, a smart wearable, smart transportation, a smart city, a mobile phone, a tablet computer, a computer having a wireless transceiver function, a wearable device, a vehicle, an uncrewed aerial vehicle, a helicopter, an aircraft, a ship, a robot, a robot arm, and a smart home device. A device form of the terminal is not limited in embodiments of this application.

### (2) RAN node:

In a possible scenario, the RAN node may also be referred to as an access network device, a RAN entity, an access node, a network device, or the like, and forms a part of a communication system, to help a terminal implement radio access. The RAN node may be a base station (base station, BS), an evolved base station (evolved base station, eNB), an access point (access point, AP), a transmission reception point (transmission reception point, TRP), a next generation NodeB (next generation NodeB, gNB), a next generation base station in a sixth generation (6th generation, 6G) mobile communication system, a base station in a future mobile communication system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, an on-board device, or the like. For example, an access network device in a vehicle to everything (vehicle to everything, V2X) technology may be a road side unit (road side unit, RSU).

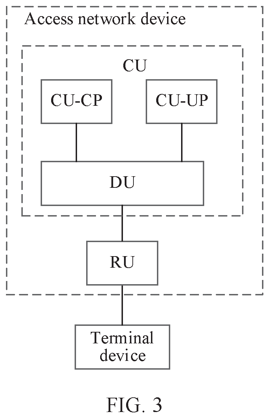

In another possible scenario, a plurality of RAN nodes coordinate to assist a terminal in implementing radio access, and different RAN nodes respectively implement some functions of an access network device. FIG. 3 is a diagram of a radio access network RAN. As shown in FIG. 3, an access network device includes a central unit (central unit, CU), a distributed unit (distributed unit, DU), and a radio unit (radio unit, RU). The CU may be connected to a core network and one or more DUs. One DU may be connected to one or more RUs, and an interface between the DU and the RU may be referred to as a fronthaul interface (fronthaul, FH). Optionally, the CU may have some functions of the core network, and the CU includes a CU-control plane (control plane, CP) and a CU-user plane (user plane, UP). The RU is configured to send a signal to a terminal or receive a signal from the terminal. For example, a RAN node may be a CU, a DU, a CU-CP, a CU-UP, or an RU.

It may be understood that in different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented through a software module, a hardware module, or a combination of the software module and the hardware module.

### (3) Division of functional modules of an access network device:

Communication between the access network device and a terminal complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like. The CU and the DU may be configured based on a protocol layer function of a radio network implemented by the CU and the DU. For example, the CU is configured to implement functions of the PDCP layer and a protocol layer (for example, the RRC layer and/or the SDAP layer) above the PDCP layer, and the DU is configured to implement a function of a protocol layer (for example, the RLC layer, the MAC layer, and/or the PHY layer) below the PDCP layer. For another example, the CU is configured to implement a function of a protocol layer (for example, the RRC layer and/or the SDAP layer) above the PDCP layer, and the DU is configured to implement a function of the PDCP layer and a protocol layer (for example, the RLC layer, the MAC layer, and/or the PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer.

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of protocol layers above the RLC layer are set in the CU, and remaining functions of the RLC layer and functions of protocol layers below the RLC layer are set in the DU. For another example, functions of the CU or the DU may be divided based on a service type or another system requirement. For example, division is performed based on a delay. A function whose processing time needs to satisfy a low-delay requirement is set in the DU, and a function whose processing time does not need to satisfy the delay requirement is set in the CU.

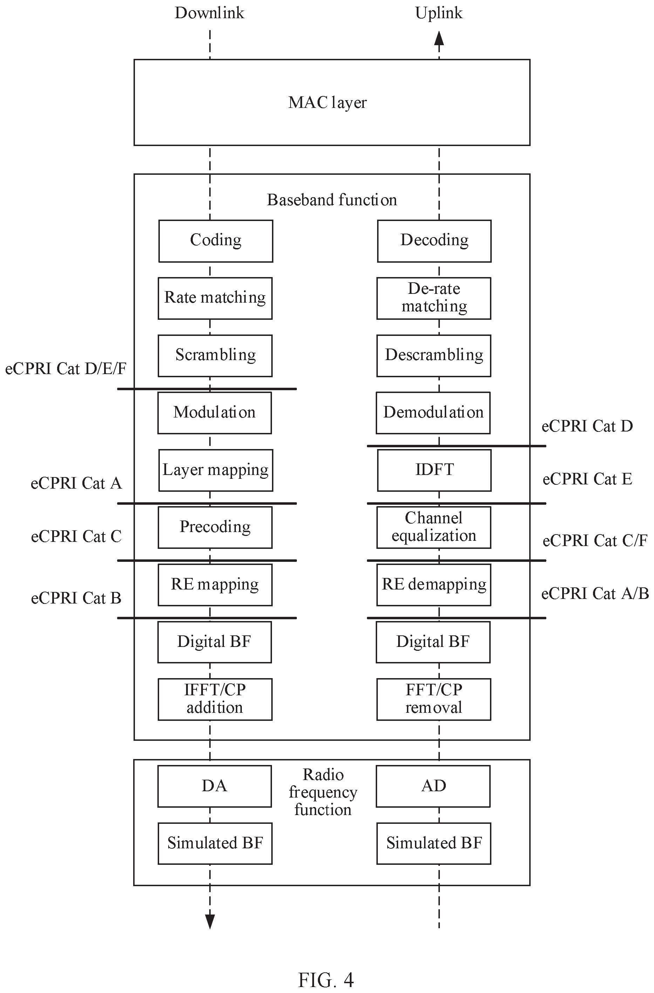

The one or more functional modules may be implemented through software, hardware, or a combination of the software and the hardware. Physically, the functional modules may be discrete or integrated. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) based on a design, or does not include a functional module shown in FIG. 4 (for example, does not include a digital BF module).

Functions of the DU and the RU may be configured in a plurality of manners based on a design.

For example, the DU is configured to implement a baseband function, and the RU is configured to implement an intermediate radio frequency function. For another example, the DU is configured to implement a higher-layer function (represented as PHY-high) of the PHY layer, and the RU is configured to implement a lower-layer function of the PHY layer or implement the lower-layer function and a radio frequency function. The higher-layer function of the physical layer may include some functions of the physical layer, and the some functions are closer to the MAC layer. The lower-layer function (represented as PHY-low) of the physical layer may include the other functions of the physical layer, and the other functions are closer to an intermediate radio frequency side.

A fronthaul interface exists between the DU and the RU. For example, a communication protocol of the fronthaul interface may be a common public radio interface (common public radio interface, CPRI) interface protocol or an enhanced common public radio interface (enhanced common public radio interface, eCPRI) interface protocol. This is not limited. Different fronthaul interfaces respectively correspond to DUs and RUs that have different functions.

As shown in FIG. 4, if the fronthaul interface between the DU and the RU is an eCPRI, compared with a CPRI, some downlink and/or uplink baseband functions are moved from the DU to the RU for implementation. Different splitting manners between the DU and the RU correspond to different categories (categories, Cats for short) of eCPRIs. FIG. 4 provides six examples of the eCPRI, which are represented by Cats A, B, C, D, E, and F (which may alternatively be represented as Options A to F, Options 1 to 6, or represented in another manner). It may be understood that there may be another splitting manner between the DU and the RU, that is, there may be another category of eCPRI.

The eCPRI Cat A is used as an example. For downlink transmission, layer mapping is used as a splitting point. The DU is configured to implement the layer mapping and one or more functions before the layer mapping (that is, one or more of coding, rate matching, scrambling, modulation, or layer mapping), and another function (for example, one or more of RE mapping, digital BF, or IFFT/CP addition) after the layer mapping is moved to the RU for implementation. For uplink transmission, RE demapping is used as a splitting point. The DU is configured to implement demapping and one or more functions before the demapping (that is, one or more of decoding, de-rate matching, descrambling, demodulation, IDFT, channel equalization, or RE demapping), and another function (for example, one or more of digital BF or FFT/CP removal) after the demapping is moved to the RU for implementation.

Similarly, the eCPRI Cat B, Cat C, Cat D, Cat E, and Cat F respectively correspond to different splitting manners between the DU and the RU. A splitting point and a function before the splitting point are implemented by the DU, and a function after the splitting point is implemented by the RU. For splitting points of various categories of eCPRIs, refer to FIG. 4. Details are not described one by one again. For example, for the eCPRI Cat B, the RE mapping is used as a splitting point for downlink transmission, and the RE demapping is used as a splitting point for uplink transmission. For uplink transmission, the RE mapping and a function before the RE mapping are implemented by the DU, and a function after the RE mapping and a radio frequency function are implemented by the RU. For downlink transmission, the RE demapping and a function before the RE demapping are implemented by the DU, and a function after the RE demapping and a radio frequency function are implemented by the RU.

Splitting manners of the eCPRIs may be symmetric for an uplink and a downlink, for example, for the eCPRI Cat B and the eCPRI Cat C shown in FIG. 4. Alternatively, splitting manners of the eCPRIs may be asymmetric for an uplink and a downlink, for example, for the eCPRI Cat A, the eCPRI Cat D, the eCPRI Cat E, and the eCPRI Cat F shown in FIG. 4. This is not limited. Optionally, for the uplink and/or the downlink, different splitting manners may be configured for different channels or different channel groups, that is, different categories of the eCPRIs are configured. One group of channels may include one or more channels.

In a possible implementation, the CU and the DU are included in a same network element, for example, a baseband unit (baseband unit, BBU). The RU may be included in a radio frequency device (also referred to as a radio frequency unit). For example, the radio frequency device may be a remote radio unit (remote radio unit, RRU), an active antenna processing unit (active antenna unit, AAU), or a remote radio head (remote radio head, RRH). A processing unit in the BBU that is configured to implement a baseband function is referred to as a base band high (base band high, BBH) unit, and a processing unit in the RRU/AAU/RRH that is configured to implement a baseband function is referred to as a base band low (base band low, BBL) unit.

For a correspondence between network elements in the ORAN system and protocol layer functions that can be implemented by the network elements, refer to Table 1 below.

**Table 1**

| ORAN network element | 3GPP protocol layer function |
|---|---|
| O-CU-CP | RRC+PDCP-C |
| O-CU-UP | SDAP+PDCP-U |
| O-DU | RLC+MAC+PHY-high |
| O-RU | PHY-low |

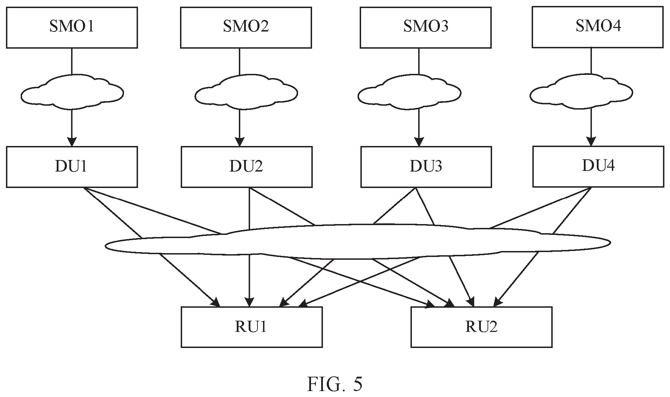

FIG. 5 is a diagram of a possible networking manner of a communication system according to an embodiment of this application. Refer to FIG. 5. The communication system may include at least one RU and a plurality of DUs, which are respectively represented as an RU1 and an RU2, a DU1, a DU2, a DU3, and a DU4.

Different DUs may belong to different operators (also referred to as a management party, a manager, or a user), and may be registered on a same RU, to share a related resource on the RU. In other words, a plurality of operators share the same RU. The shared resource of the RU may be a signal processing resource, and includes but is not limited to at least one of the following: a spectrum resource, a power resource, and an azimuth or a tilt angle of an antenna associated with the RU.

The plurality of operators may be classified into an operator of a primary constructor and an operator of a sharing party based on roles. The operator of the primary constructor may be a provider of the RU, to provide a resource of the RU for sharing with another operator. The operator of the primary constructor may perform network communication with a DU of the operator of the primary constructor through a network management device (Service Management and Orchestration, SMO) of the operator of the primary constructor. The DU of the operator of the primary constructor may be connected to the RU provided by the operator of the primary constructor to establish a control plane communication channel, a user plane communication channel, and a management plane communication channel, allocate an available resource of the RU to a DU of another operator, and configure an operation permission of the DU of the another operator for the RU. The DU of the operator of the primary constructor may be referred to as a master DU for short.

The operator of the sharing party may perform network communication with a DU of the operator of the sharing party through the SMO of the operator of the sharing party, and may be connected to the RU provided by the operator of the primary constructor to establish the control plane communication channel, the user plane communication channel, and the management plane communication channel. The operator of the sharing party may use the network management device and the DU of the operator of the sharing party, and use a resource of the RU allocated by the operator of the primary constructor to implement a service of the operator of the sharing party. The DU of the operator of the sharing party may be referred to as a shared DU for short.

For example, in FIG. 5, SMO1, the DU1, and the RU1 may belong to a same operator A. In other words, the operator A is a provider of the RU1, that is, a primary constructor. The DU2, the DU3, and the DU4 are shared DUs of the RU1, and share a resource of the RU1 with the DU1. SMO2, the DU2, and the RU2 may belong to a same operator B. In other words, the operator B is a primary constructor of the RU2. The DU1, the DU3, and the DU4 are shared DUs of the RU2, and share a resource of the RU2 with the DU2. The DU3 and an RU3 (not shown in the figure) may belong to an operator C. In other words, the operator C is a primary constructor of the RU3. The DU1, the DU2, and the DU4 are shared DUs of the RU3, and share a resource of the RU3 with the DU3. The DU4 and an RU4 (not shown in the figure) may belong to an operator D. In other words, the operator D is a primary constructor of the RU4. The DU1, the DU2, and the DU3 are shared DUs of the RU4, and share a resource of the RU4 with the DU4. That is, for a same DU, when the DU is oriented to different RUs, the DU has different roles.

The shared DU may further implement, based on an operation permission granted by the master DU, some operation and maintenance operations on a shared RU. The operation and maintenance operations may include at least one of the following: resetting the RU, upgrading software of the RU, or adjusting a component (for example, an antenna) associated with the RU. The shared DU may further request the master DU to adjust and update the allocated resource based on a use permission, a quota, and the like for the resource of the RU allocated by the master DU for the shared DU.

For ease of understanding, implementation details of a communication method in embodiments of this application are described below by using an example in which the DU1 and the RU1 in FIG. 5 are used as network devices of the operator of the primary constructor, the DU2 is used as a network device of the operator of the sharing party, and the DU1 and the DU2 share a resource of the RU1. It should be understood that the method is also applicable to another shared DU of the RU1, and is also applicable to another RU, a master DU of the another RU, and a shared DU of the another RU. Details are not described below.

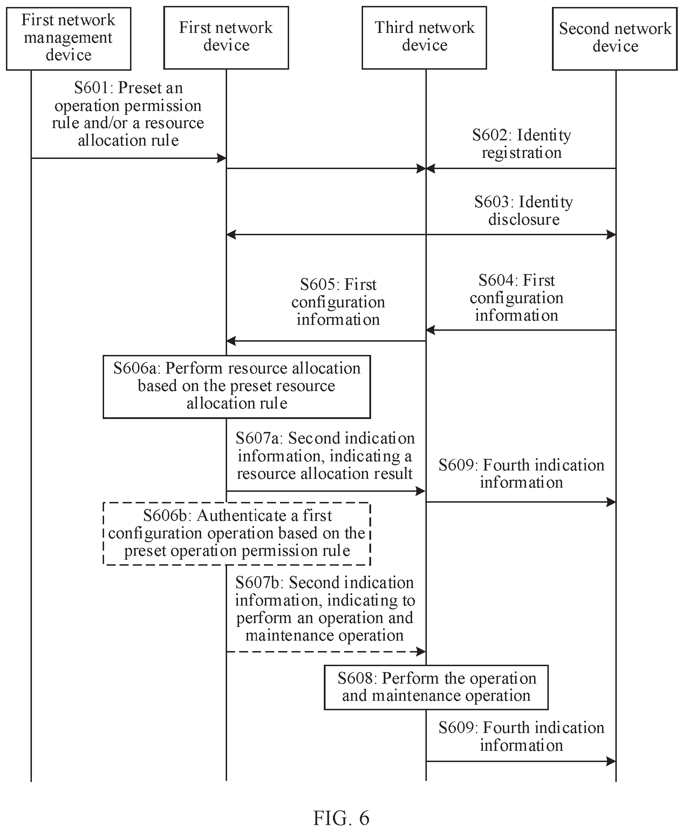

FIG. 6 is a schematic flowchart of a communication method according to an embodiment of this application. As shown in FIG. 6, the communication method may include the following steps.

### Registration phase:

S601: A first network management device presets an operation permission rule and/or a resource allocation rule on a first network device.

The first network management device may be implemented as the SMO1 in FIG. 5, and the first network device may be implemented as the DU1 in FIG. 5. A second network device may be implemented as the DU2 in FIG. 5, and a third network device may be implemented as the RU1 in FIG. 5. The DU1 and the RU1 belong to a same manager (for example, represented as a first party), and the DU2 belongs to another manager (for example, represented as a second party).

The operation permission rule may indicate operation permissions of different network devices (for example, different DUs in FIG. 5) for the third network device. The operation permission may include at least one of the following: a permission to reset the third network device, a permission to upgrade software of the third network device, a permission to adjust a component (for example, an antenna) associated with the third network device, or the like. The resource allocation rule may indicate use permissions and quotas of the different network devices (for example, the different DUs in FIG. 5) for a signal processing resource of the third network device. For ease of description, in the following, first information is used to represent the operation permission rule, and second information is used to represent the resource allocation rule. The names are not further distinguished or described in detail one by one below.

When S601 is performed, the first network management device sends the first information and/or the second information to the first network device. Correspondingly, the first network device may receive the first information and/or the second information from the first network management device, and store the first information and/or the second information.

S602: The first network device and the second network device each establish a communication connection to the third network device, and perform identity registration with the third network device.

For example, the first network device may send identification information of the first network device to the third network device, to perform identity registration with the third network device. The second network device may send identification information of the second network device to the third network device, to perform identity registration with the third network device. The identification information may be, for example, a role name, and may be used to identify different instances or identify different device types. An example in which the first network device is implemented as the DU1 and the second network device is implemented as the DU2 is used. A role of the DU1 is, for example, a master DU of the RU1, and a role of the DU2 is, for example, a shared DU of the RU1. It should be understood that the DU1 and the DU2 are merely used as examples to represent some DUs that share a related resource of the RU1. This is not limited herein. In another embodiment, other DUs sharing the related resource of the RU1, for example, the DU3 and the DU4 shown in FIG. 5, may also exist. In addition, any DU may further perform identity registration with the RU1 based on other information. This is not limited in embodiments of this application.

S603: The third network device discloses identities to the first network device and the second network device. Correspondingly, the first network device and the second network device each may learn of identities of a plurality of network devices connected to the third network device.

Specifically, the third network device may disclose third indication information to all of the plurality of network devices that have been connected to the third network device. The third indication information may include identification information of the plurality of network devices connected to the third network device. The plurality of network devices include, for example, the first network device and the second network device. The third indication information includes, for example, the identification information of the first network device and the identification information of the second network device. After receiving the third indication information, the first network device may learn, based on content of the third indication information, that the first network device and the second network device share the signal processing resource of the third network device. After receiving the third indication information, the second network device may learn, based on content of the third indication information, that the first network device and the second network device share the signal processing resource of the third network device. Roles of the plurality of network devices connected to the third network device may be further learned of based on the identification information indicated by the third indication information. For example, the first network device is a master DU, and the second network device is a shared DU.

It should be understood that, in this embodiment of this application, when a new DU performs identity registration with the third network device by performing S602, the third network device needs to perform S603, to disclose identities of a plurality of network devices newly connected to the third network device, so that different network devices connected to the third network device mutually learn of identities of other network devices, thereby facilitating subsequent configuration operations such as resource management and device operation and maintenance on the third network device.

### Resource management and device operation and maintenance phase:

S604: The second network device may send first configuration information to the third network device based on a running condition of the second network device, where the first configuration information may be used to request to dynamically allocate a related resource of the third network device, or may be used to perform an operation and maintenance operation on the third network device. Correspondingly, the third network device may receive the first configuration information from the second network device.

The first configuration information may be carried in a packet from the second network device.

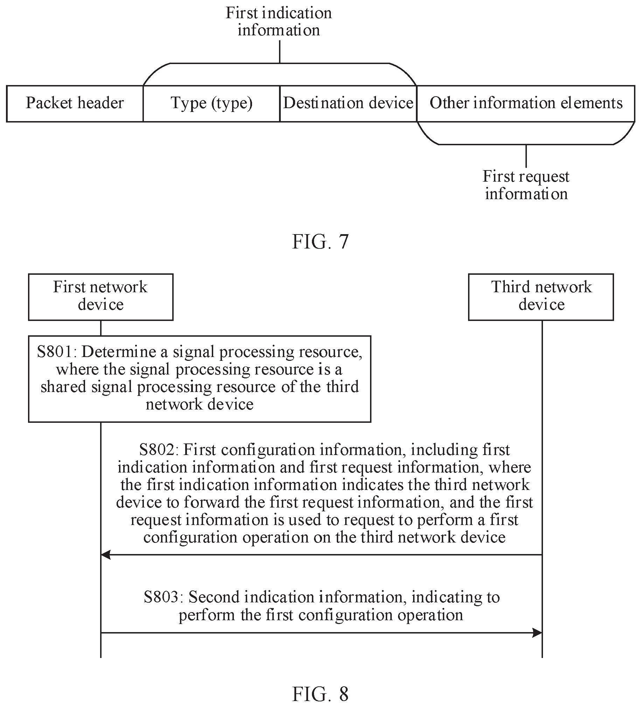

For example, a format of the packet may be shown in FIG. 7, and includes a packet header and the first configuration information. The first configuration information may include first indication information and first request information. The first indication information may be located in a "type (type)" field and a "destination device" field in the packet. The "type (type)" field indicates that the packet has a specific ID/type, for example, indicates a packet used for negotiation between network devices (for example, DUs). The "destination device" field indicates a target network device of the packet, that is, a network device (for example, a master DU) that finally processes the packet. The field may specifically carry identification information of the destination device, or may carry other information that can indicate the destination device. This is not limited herein. The first request information may be located in an "other information elements (other information elements)" field in the packet, and is used to request a first configuration operation on the third network device. For example, the first configuration operation may include, for example, a resource management operation on the third network device, or may include an operation and maintenance operation on the third network device.

S605: The third network device identifies the first indication information, and forwards the first configuration information to the first network device when the "type" field indicates that the first indication information is used for negotiation between the network devices and the "destination device" field indicates the first network device. Correspondingly, the first network device receives the first configuration information from the third network device.

Based on different operation types, the first configuration operation may be the resource management operation on the third network device, for example, a resource allocation request operation, and may be used to request to allocate or readjust the signal processing resource of the third network device. Alternatively, the first configuration operation may be the operation and maintenance operation on the third network device, and includes but is not limited to at least one of the following: resetting the third network device, upgrading the software of the third network device, or adjusting the component (for example, the antenna) associated with the third network device.

Based on different types of the first configuration operation, the communication method may subsequently include the following steps.

S606a: When the first configuration operation is a resource allocation request operation on the signal processing resource of the third network device, the first network device may dynamically perform resource allocation based on the preset resource allocation rule (that is, the second information), for example, allocate the signal processing resource, for example, represented as a second resource, of the third network device to the second network device. Specifically, the first network device may generate second indication information, where the second indication information indicates a resource allocation result of the signal processing resource of the third network device.

S607a: The first network device sends the second indication information to the third network device, where the second indication information may specifically indicate the resource allocation result of the signal processing resource of the third network device.

S606b: When the first configuration operation is any one of the foregoing operation and maintenance operations, the first network device may dynamically authenticate the first configuration operation based on the preset operation permission rule (that is, the first information), that is, determine, based on the preset operation permission rule, whether the first configuration operation is a configuration operation that is allowed to be performed. If the second network device has a permission to perform a corresponding operation and maintenance operation, the authentication succeeds. If the second network device does not have the permission to perform the corresponding operation and maintenance operation, the authentication fails.

S607b: The first network device sends the second indication information to the third network device, where the second indication information indicates to perform a corresponding operation and maintenance operation, for example, resetting the third network device, upgrading the software of the third network device, or adjusting the component (for example, the antenna) associated with the third network device.

S608: The third network device performs the corresponding operation and maintenance operation based on the second indication information, for example, resetting the third network device, upgrading the software of the third network device, or adjusting the component (for example, the antenna) associated with the third network device.

After processing of the first configuration operation in different cases is completed through different branches of S606a and S607a or S606b, S607b and S608, the communication method may subsequently include the following step:
S609: The third network device sends fourth indication information to the second network device, where the fourth indication information includes a result of performing the first configuration operation. Correspondingly, the second network device receives the fourth indication information from the third network device.

For example, if the first configuration operation indicated by the first configuration information sent in S602 is the resource allocation request operation on the signal processing resource of the third network device, the result of the first configuration operation includes resource allocation information of the signal processing resource of the third network device that may be used by the second network device. Therefore, the second network device may implement a service of the second network device by using the allocated resource of the third network device based on the resource allocation information.

Alternatively, for example, if the first configuration operation indicated by the first configuration information sent in S602 is the operation and maintenance operation on the third network device, the result of the first configuration operation includes a result of performing the operation and maintenance operation on the third network device, for example, a result of resetting the third network device, a result of upgrading the software of the third network device, or the result of adjusting the component (for example, the antenna) associated with the third network device.

In this case, according to the foregoing method, the third network device may provide a logical communication channel for the first network device and the second network device, and the third network device may forward a packet related to a resource management request and/or a device operation and maintenance request from the second network device to the first network device for processing, so that the first network device and the second network device may dynamically negotiate a use condition of the resource of the third network device and dynamically implement the operation and maintenance operation on the third network device and the related component. The method not only may be automatically initiated and processed between different network devices, greatly reducing dependence on manual labor, but also may improve real-time performance of resource allocation and dynamic adjustment for the third network device, thereby improving operation and maintenance efficiency of a communication system.

In a specific implementation, a first network device is used to represent the DU1 in FIG. 5, a second network device is used to represent the DU2 in FIG. 5, and a third network device is used to represent the RU1 in FIG. 5. As shown in FIG. 8, a communication method implemented by the first network device may include the following steps.

S801: The first network device determines a signal processing resource, where the signal processing resource is a shared signal processing resource of the third network device.

In this embodiment of this application, when receiving third indication information from the third network device, the first network device may determine, based on the third indication information, that the first network device and the second network device share the signal processing resource of the third network device. The third indication information may be sent by the third network device when the third network device discloses identities to different network devices (for example, DUs), as shown in S603 in FIG. 6.

Before receiving the third indication information, the first network device may send third information to the third network device, where the third information may include identification information of the first network device, to perform identity registration with the third network device, as shown in S602 in FIG. 6.

S802: The first network device receives first configuration information.

For example, the first network device receives the first configuration information from the third network device.

The first configuration information may include first indication information and first request information. The first indication information indicates the third network device to forward the first request information, as shown in FIG. 7. The first request information is used to request a first configuration operation on the third network device.

S803: The first network device sends second indication information, where the second indication information indicates to perform the first configuration operation.

For example, the first network device sends the second indication information to the third network device.

When the first configuration operation may include a resource allocation request operation on a signal processing resource of the third network device, the second indication information indicates a resource allocation result of the signal processing resource of the third network device. The signal processing resource may include, for example, at least one of the following: a spectrum resource, a power resource, or an azimuth or a tilt angle of an antenna associated with the third network device.

The first configuration operation may include an operation and maintenance operation, the second indication information indicates to perform the operation and maintenance operation, and the operation and maintenance operation may include at least one of the following: resetting the third network device, upgrading software of the third network device, or adjusting a component associated with the third network device.

In a specific implementation, before performing S801, the first network device may receive first information and/or second information from a first network management device in the registration phase shown in FIG. 6. The first network management device is configured to manage the first network device and the third network device. The first information is a preset operation permission rule, and indicates operation permissions of different network devices for the third network device. The second information is a preset resource allocation rule, and indicates use permissions and quotas of different network devices for the signal processing resource of the third network device.

When the first configuration operation is the resource allocation request operation on the signal processing resource of the third network device, before performing S803, the first network device may generate second indication information based on the second information. The second indication information may indicate a resource allocation result of the signal processing resource of the third network device.

When the first configuration operation is the operation and maintenance operation, before performing S803, the first network device may authenticate the first configuration operation based on the first information, to verify an operation permission of the second network device. If the second network device has the corresponding operation permission, that is, the authentication succeeds, the second indication information sent during performing of S803 is specifically used to instruct the third network device to perform a corresponding operation and maintenance operation. If the second network device does not have the corresponding operation permission, that is, the authentication fails, the second indication information sent during the performing of S803 is specifically used to indicate that the authentication fails. For example, the second network device does not have the permission to perform the operation and maintenance operation on the third network device.

Therefore, according to the foregoing method, the third network device may provide a logical communication channel for the first network device and the second network device. The first network device may receive, based on the logical communication channel, a request packet from the second network device for implementing resource management and/or device operation and maintenance, and process the received request packet based on the preset resource allocation rule and/or operation permission rule, so that the first network device and the second network device may dynamically negotiate a use condition of the resource of the third network device and dynamically perform an operation and maintenance operation on a related component of the RU1. The method not only may reduce dependence on operation and maintenance personnel, but also may improve real-time performance of adjusting allocation of a resource of the RU1, thereby improving operation and maintenance efficiency of a communication system.

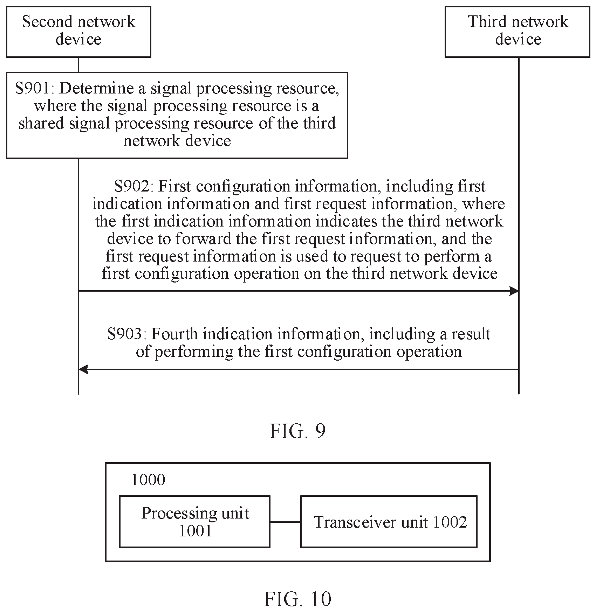

As shown in FIG. 9, a communication method implemented by a second network device may include the following steps.

S901: The second network device determines to share a signal processing resource of a third network device with a first network device.

In this embodiment of this application, when receiving third indication information from the third network device, the second network device may determine, based on the third indication information, that the first network device and the second network device share the signal processing resource of the third network device. The third indication information may be sent by the third network device when the third network device discloses identities to different network devices (for example, DUs), as shown in S603 in FIG. 6.

Before receiving the third indication information, the second network device may send fourth information to the third network device, where the fourth information may include identification information of the second network device, to perform identity registration with the third network device, as shown in S602 in FIG. 6.

S902: The second network device sends first configuration information to the third network device based on a running condition of the second network device.

In this embodiment of this application, the first configuration information may include first indication information and first request information. The first indication information indicates the third network device to forward the first request information, as shown in FIG. 7.

The first request information is used to request a first configuration operation on the third network device. For example, the first configuration operation may be a resource allocation request operation on the signal processing resource of the third network device. The signal processing resource may include, for example, at least one of the following: a spectrum resource, a power resource, or an azimuth or a tilt angle of an antenna associated with the third network device. Alternatively, the first configuration operation may be an operation and maintenance operation, and the operation and maintenance operation may include at least one of the following: resetting the third network device, upgrading software of the third network device, or adjusting a component associated with the third network device.

S903: The second network device receives fourth indication information from the third network device, where the fourth indication information includes a result of performing the first configuration operation. For detailed implementation details, refer to related descriptions with reference to S606a and S607a, S606b and S607b, S608, and S609. Details are not described herein again.

Therefore, according to the foregoing method, the third network device may provide a logical communication channel for the first network device and the second network device, the second network device may send, based on the logical communication channel, a request packet for implementing resource management and/or device operation and maintenance to the first network device, and the third network device may forward the related request packet from the second network device to the first network device for processing, so that the first network device and the second network device may dynamically negotiate a use condition of the resource of the third network device and dynamically perform an operation and maintenance operation on a related component of the third network device. The method not only may reduce dependence on operation and maintenance personnel, but also may improve real-time performance of adjusting allocation of the resource of the third network device, thereby improving operation and maintenance efficiency of a communication system.

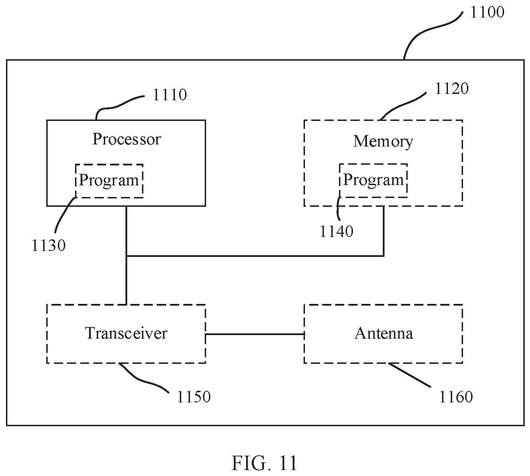

FIG. 10 and FIG. 11 each are a diagram of a possible structure of a communication apparatus according to an embodiment of this application. These communication apparatuses may be configured to implement functions of a distributed unit or a radio frequency unit in the foregoing method embodiments. Therefore, beneficial effects of the foregoing method embodiments can also be implemented. In embodiments of this application, the communication apparatus may be the distributed unit or the radio frequency unit, or may be a module (for example, a chip) used in the distributed unit or the radio frequency unit.

As shown in FIG. 10, the communication apparatus 1000 includes a processing unit 1001 and a transceiver unit 1002. The communication apparatus 1000 is configured to implement a function of the distributed unit or the radio frequency unit in the foregoing method embodiments.

When the communication apparatus 1000 is configured to perform an operation of the first network device in embodiments of FIG. 6, FIG. 8, or FIG. 9, the processing unit 1001 is configured to determine a signal processing resource, where the signal processing resource is a shared signal processing resource of a third network device. The transceiver unit 1002 is configured to: receive first configuration information, where the first configuration information includes first indication information and first request information, the first indication information indicates the third network device to forward the first request information, and the first request information is used to request a first configuration operation on the third network device; and send second indication information, where the second indication information indicates to perform the first configuration operation.

In a possible implementation, the first configuration operation includes a resource allocation request operation on the signal processing resource of the third network device, and the second indication information indicates a resource allocation result of the signal processing resource of the third network device.

In a possible implementation, the first configuration operation includes an operation and maintenance operation, the second indication information indicates to perform the operation and maintenance operation, and the operation and maintenance operation includes at least one of the following: resetting the third network device, upgrading software of the third network device, or adjusting a component associated with the third network device.

In a possible implementation, the signal processing resource includes at least one of the following: a spectrum resource, a power resource, or an azimuth or a tilt angle of an antenna associated with the third network device.

In a possible implementation, the processing unit 1001 is specifically configured to receive third indication information through the transceiver unit 1002, where the third indication information indicates identification information of a plurality of network devices connected to the third network device, the plurality of network devices include the first network device and a second network device, and the signal processing resource is shared by the first network device and the second network device.

In a possible implementation, the transceiver unit 1002 is further configured to receive first information, where the first information includes operation permissions of different network devices for the third network device, and the first network management device is configured to manage the first network device and the third network device. The processing unit 1001 is configured to store the first information in a storage unit.

In a possible implementation, the processing unit 1001 is further configured to authenticate the first configuration operation based on the first information.

In a possible implementation, the transceiver unit 1002 is further configured to receive second information from the first network management device, where the second information includes use permissions and quotas of different network devices for the signal processing resource of the third network device. The processing unit 1001 is further configured to store the second information in the storage unit.

In a possible implementation, when the first configuration operation includes the resource allocation request operation on the signal processing resource of the third network device, the processing unit 1001 is further configured to generate the second indication information based on the second information.

In a possible implementation, the transceiver unit 1002 is further configured to send third information, where the third information includes identification information of the first network device.

In a possible implementation, the third network device is a radio frequency unit RU, and the first network device and the second network device are distributed units DUs.

When the communication apparatus 1000 is configured to perform an operation of the third network device in embodiments of FIG. 6, FIG. 8, and FIG. 9, the processing unit 1001 is configured to determine a signal processing resource, where the signal processing resource is a shared signal processing resource of the third network device. The transceiver unit 1002 is configured to: receive first configuration information, where the first configuration information includes first indication information and first request information, the first indication information indicates the third network device to forward the first request information, and the first request information is used to request a first configuration operation on the third network device; send the first configuration information; and receive second indication information, where the second indication information indicates to perform the first configuration operation.

In a possible implementation, the first configuration operation includes a resource allocation request operation on the signal processing resource of the third network device, and the second indication information indicates a resource allocation result of the signal processing resource of the third network device.

In a possible implementation, the first configuration operation includes an operation and maintenance operation, the second indication information indicates to perform the operation and maintenance operation, and the operation and maintenance operation includes at least one of the following: resetting the third network device, upgrading software of the third network device, or adjusting a component associated with the third network device.

In a possible implementation, the signal processing resource includes at least one of the following: a spectrum resource, a power resource, or an azimuth or a tilt angle of an antenna associated with the third network device. In a possible implementation, the processing unit 1001 is configured to: receive third information through the transceiver unit 1002, where the third information includes identification information of the first network device; and receive fourth information through the transceiver unit 1002, where the fourth information includes identification information of the second network device. The processing unit 1001 is configured to determine the signal processing resource based on the third information and the fourth information.

In a possible implementation, the transceiver unit 1002 is configured to send third indication information, where the third indication information indicates identification information of a plurality of network devices connected to the third network device, the plurality of network devices include the first network device and a second network device, and the signal processing resource is shared by the first network device and the second network device.

In a possible implementation, the transceiver unit 1002 is configured to send fourth indication information, where the fourth indication information includes a result of performing the first configuration operation.

In a possible implementation, the third network device is a radio frequency unit RU, and the first network device and the second network device are distributed units DUs.

When the communication apparatus 1000 is configured to perform an operation of the second network device in embodiments of FIG. 6, FIG. 8, and FIG. 9, the processing unit 1001 is configured to determine a signal processing resource, where the signal processing resource is a shared signal processing resource of a third network device. The transceiver unit 1002 is configured to: send first configuration information, where the first configuration information includes first indication information and first request information, the first indication information indicates the third network device to forward the first request information, and the first request information is used to request a first configuration operation on the third network device; and receive fourth indication information, where the fourth indication information includes a result of performing the first configuration operation.

In a possible implementation, the first configuration operation includes a resource allocation request operation on the signal processing resource of the third network device.

In a possible implementation, the first configuration operation includes an operation and maintenance operation, and the operation and maintenance operation includes at least one of the following: resetting the third network device, upgrading software of the third network device, or adjusting a component associated with the third network device.

In a possible implementation, the signal processing resource includes at least one of the following: a spectrum resource, a power resource, or an azimuth or a tilt angle of an antenna associated with the third network device.

In a possible implementation, the transceiver unit 1002 is further configured to send fourth information, where the fourth information includes identification information of the second network device.

In a possible implementation, the transceiver unit 1002 is further configured to receive third indication information, where the third indication information indicates identification information of a plurality of network devices connected to the third network device, the plurality of network devices include the first network device and the second network device, and the signal processing resource is shared by the first network device and the second network device.

In a possible implementation, the third network device is a radio frequency unit RU, and the first network device and the second network device are distributed units DUs.

For more detailed descriptions of the processing unit 1001 and the transceiver unit 1002, reference may directly be made to related descriptions in the foregoing method embodiments. Details are not described herein.

FIG. 11 is a diagram of a possible structure of a communication apparatus. It may be understood that the communication apparatus 1100 includes a means in a necessary form, such as a module, a unit, an element, a circuit, or an interface, which are appropriately configured together to implement the solution. The communication apparatus 1100 may be the RAN node, the terminal, the core network device, or another network device in FIG. 2, or may be a component (for example, a chip) of these devices, and is configured to implement the method described in the following method embodiments. The communication apparatus 1100 includes one or more processors 1110. The processor 1110 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, the RAN node, the terminal, or the chip), execute a software program, and process data of the software program.

Optionally, in a design, the processor 1110 may include a program 1130 (which sometimes may also be referred to as code or instructions). The program 1130 may be run on the processor 1110, so that the communication apparatus 1100 performs the method described in the foregoing embodiments.

Optionally, the communication apparatus 1100 may include one or more memories 1120, storing a program 1140 (which sometimes may also be referred to as code or instructions). The program 1140 may be run on the processor 1110, so that the communication apparatus 1100 performs the method described in the foregoing method embodiments.

Optionally, the processor 1110 and/or the memory 1120 may further store data. The processor and the memory may be separately arranged, or may be integrated together.

Optionally, the communication apparatus 1100 may further include a transceiver 1150 and/or an antenna 1160. The processor 1110 sometimes may also be referred to as a processing unit, and controls the communication apparatus (for example, the RAN node or the terminal). The transceiver 1150 sometimes may also be referred to as a transceiver unit, a transceiver machine, a transceiver circuit, a transceiver, or the like, and is configured to implement a transceiver function of the communication apparatus through the antenna 1160.

When the communication apparatus 1100 is configured to implement the method embodiments of FIG. 6, FIG. 8, or FIG. 9, the processor 1110 is configured to implement a function of the processing unit, and the transceiver 1150 is configured to implement a function of the transceiver unit.

The processor in embodiments of this application may include a central processing unit, a general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In an optional implementation, the processor in embodiments of this application may include the baseband processor and the central processing unit. The baseband processor is mainly configured to process the communication protocol and the communication data, and the central processing unit is mainly configured to control the entire communication apparatus, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the communication apparatus may include a plurality of baseband processors to adapt to different network standards, the communication apparatus may include a plurality of central processing units to enhance a processing capability thereof, and components in the communication apparatus may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

When the communication apparatus is the chip applied to the radio frequency unit, the chip of the radio frequency unit implements a function of the radio frequency unit in the foregoing method embodiment. The chip of the radio frequency unit receives information from another module in the radio frequency unit, where the information is from the distributed unit; or the chip of the radio frequency unit sends information to another module in the radio frequency unit, where the information needs to be sent to the distributed unit.

When the communication apparatus is the chip applied to the distributed unit, the chip of the distributed unit implements a function of the distributed unit in the foregoing method embodiment. The chip of the distributed unit receives information from another module in the distributed unit, where the information is from the radio frequency unit; or the chip of the distributed unit sends information to another module in the distributed unit, where the information needs to be sent to the radio frequency unit.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in the base station or the terminal. Certainly, the processor and the storage medium may exist in the base station or the terminal as discrete components.

All or some of the foregoing embodiments may be implemented through software, hardware, firmware, or any combination thereof. During implementation through the software, all or some of embodiments may be implemented in a form of a computer program product. The computer program product includes one or more computer programs or instructions. When the computer programs or the instructions are loaded and executed on a computer, all or some of the procedures or functions according to embodiments of this application are executed. The computer may be a general-purpose computer, a dedicated computer, a computer network, a base station, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium accessible by the computer, or a data storage device such as a server or a data center integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" refers to one or more, and "a plurality of" refers to two or more. "And/or" describes an association relationship between associated objects and indicates that three relationships may exist. For example, A and/or B may indicate the following cases: only A exists, both A and B exist, and only B exists, where A and B may be singular or a plural. In text descriptions of this application, a character "/" generally indicates an "or" relationship between the associated objects. In a formula of this application, the character "/" indicates a "division" relationship between the associated objects.

It may be understood that various numerical numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, applied to a first network device, wherein the method comprises:
determining a signal processing resource, wherein the signal processing resource is a shared signal processing resource of a third network device;
receiving first configuration information, wherein the first configuration information comprises first indication information and first request information, the first indication information indicates the third network device to forward the first request information, and the first request information is used to request a first configuration operation on the third network device; and
sending second indication information, wherein the second indication information indicates to perform the first configuration operation.

2. The method according to claim 1, wherein the first configuration operation comprises a resource allocation request operation on the signal processing resource of the third network device, and the second indication information indicates a resource allocation result of the signal processing resource of the third network device.

3. The method according to claim 1 or 2, wherein the first configuration operation comprises an operation and maintenance operation, the second indication information indicates to perform the operation and maintenance operation, and the operation and maintenance operation comprises at least one of the following: resetting the third network device, upgrading software of the third network device, or adjusting a component associated with the third network device.

4. The method according to any one of claims 1 to 3, wherein the signal processing resource comprises at least one of the following:
a spectrum resource, a power resource, or an azimuth or a tilt angle of an antenna associated with the third network device.

5. The method according to any one of claims 1 to 4, wherein the method further comprises:
receiving third indication information, wherein the third indication information indicates identification information of a plurality of network devices connected to the third network device, the plurality of network devices comprise the first network device and a second network device, and the signal processing resource is shared by the first network device and the second network device.

6. The method according to any one of claims 1 to 5, wherein the method further comprises:
receiving first information from a first network management device, wherein the first network management device is configured to manage the first network device and the third network device, and the first information comprises operation permissions of different network devices for the third network device; and
storing the first information.

7. The method according to claim 6, wherein the method further comprises:
authenticating the first configuration operation based on the first information.

8. The method according to any one of claims 1 to 7, wherein the method further comprises:
receiving second information from the first network management device, wherein the second information comprises use permissions and quotas of different network devices for the signal processing resource of the third network device; and
storing the second information.

9. The method according to claim 8, wherein when the first configuration operation comprises the resource allocation request operation on the signal processing resource of the third network device, the method further comprises:
generating the second indication information based on the second information.

10. The method according to any one of claims 1 to 9, wherein the method further comprises:
sending third information, wherein the third information comprises identification information of the first network device.

11. The method according to any one of claims 1 to 10, wherein the third network device is a radio frequency unit RU, and the first network device and the second network device are distributed units DUs.

12. A communication method, applied to a third network device, wherein the method comprises:
determining a signal processing resource, wherein the signal processing resource is a shared signal processing resource of the third network device;
receiving first configuration information, wherein the first configuration information comprises first indication information and first request information, the first indication information indicates the third network device to forward the first request information, and the first request information is used to request a first configuration operation on the third network device;
sending the first configuration information; and
receiving second indication information, wherein the second indication information indicates to perform the first configuration operation.

13. The method according to claim 12, wherein the first configuration operation comprises a resource allocation request operation on the signal processing resource of the third network device, and the second indication information indicates a resource allocation result of the signal processing resource of the third network device.

14. The method according to claim 12 or 13, wherein the first configuration operation comprises an operation and maintenance operation, the second indication information indicates to perform the operation and maintenance operation, and the operation and maintenance operation comprises at least one of the following: resetting the third network device, upgrading software of the third network device, or adjusting a component associated with the third network device.

15. The method according to any one of claims 12 to 14, wherein the signal processing resource comprises at least one of the following:
a spectrum resource, a power resource, or an azimuth or a tilt angle of an antenna associated with the third network device.

16. The method according to any one of claims 12 to 15, wherein the method further comprises:
receiving third information, wherein the third information comprises identification information of a first network device; and
receiving fourth information, wherein the fourth information comprises identification information of a second network device, and
the determining the signal processing resource comprises:
determining the signal processing resource based on the third information and the fourth information.

17. The method according to any one of claims 12 to 16, wherein the method further comprises:
sending third indication information, wherein the third indication information indicates identification information of a plurality of network devices connected to the third network device, the plurality of network devices comprise the first network device and the second network device, and the signal processing resource is shared by the first network device and the second network device.

18. The method according to any one of claims 12 to 17, wherein the method further comprises:
sending fourth indication information, wherein the fourth indication information comprises a result of performing the first configuration operation.

19. The method according to any one of claims 12 to 18, wherein the third network device is a radio frequency unit RU, and the first network device and the second network device are distributed units DUs.

20. A communication method, applied to a second network device, wherein the method comprises:
determining a signal processing resource, wherein the signal processing resource is a shared signal processing resource of a third network device;
sending first configuration information, wherein the first configuration information comprises first indication information and first request information, the first indication information indicates the third network device to forward the first request information, and the first request information is used to request a first configuration operation on the third network device; and
receiving fourth indication information, wherein the fourth indication information comprises a result of performing the first configuration operation.

21. The method according to claim 20, wherein the first configuration operation comprises a resource allocation request operation on the signal processing resource of the third network device.

22. The method according to claim 20 or 21, wherein the first configuration operation comprises an operation and maintenance operation, and the operation and maintenance operation comprises at least one of the following: resetting the third network device, upgrading software of the third network device, or adjusting a component associated with the third network device.

23. The method according to any one of claims 20 to 22, wherein the signal processing resource comprises at least one of the following:
a spectrum resource, a power resource, or an azimuth or a tilt angle of an antenna associated with the third network device.

24. The method according to any one of claims 20 to 23, wherein the method further comprises:
sending fourth information, wherein the fourth information comprises identification information of the second network device.

25. The method according to any one of claims 20 to 24, wherein the method further comprises:
receiving third indication information, wherein the third indication information indicates identification information of a plurality of network devices connected to the third network device, the plurality of network devices comprise a first network device and the second network device, and the signal processing resource is shared by the first network device and the second network device.

26. The method according to any one of claims 20 to 25, wherein the third network device is a radio frequency unit RU, and the first network device and the second network device are distributed units DUs.

27. A communication apparatus, comprising a unit configured to perform the method according to any one of claims 1 to 11, or comprising a unit configured to perform the method according to any one of claims 12 to 19, or comprising a unit configured to perform the method according to any one of claims 20 to 26.

28. A communication apparatus, wherein the communication apparatus comprises at least one processor, and the at least one processor is configured to invoke a computer program or instructions in a memory, to perform the method according to any one of claims 1 to 11, or perform the method according to any one of claims 12 to 19, or perform the method according to any one of claims 20 to 26.

29. A chip system, wherein the chip system comprises at least one processor, and the at least one processor is configured to invoke one or more computer programs or instructions in a memory, to implement the method according to any one of claims 1 to 11, or implement the method according to any one of claims 12 to 19, or implement the method according to any one of claims 20 to 26.

30. A communication system, comprising one or more of the following: a network device configured to implement the method according to any one of claims 1 to 11, a network device configured to implement the method according to any one of claims 12 to 19, and a network device configured to implement the method according to any one of claims 20 to 26.

31. A computer-readable storage medium, wherein the computer-readable storage medium stores computer-executable instructions, and the computer-executable instructions, when invoked by an electronic apparatus, cause the electronic apparatus to perform the method according to any one of claims 1 to 11, or cause the electronic apparatus to perform the method according to any one of claims 12 to 19, or cause the electronic apparatus to perform the method according to any one of claims 20 to 26.

32. A computer program product, comprising computer-executable instructions, wherein the computer-executable instructions, when run on a computer, cause the computer to perform the method according to any one of claims 1 to 11, or cause the computer to perform the method according to any one of claims 12 to 19, or cause the computer to perform the method according to any one of claims 20 to 26.
